# EUROPEAN PATENT APPLICATION

(11) **EP 4 186 399 A1**
(43) Date of publication of application: **31.05.2023**
(21) Application number: 21210480.6
(22) Date of filing: 25.11.2021
(51) Int. Cl.: A47J 43/07, A47J 36/32, A47J 31/60

(54) **KITCHEN MACHINE WITH CLEANING FUNCTION**

(71) Applicant: CookingPal Limited, Kwun Tong, Kowloon (HK)
(72) Inventor: Buck, Markus, Kowloon (HK)
(74) Representative: Gunzelmann, Rainer

(57) **Abstract**

The invention relates to a kitchen machine having an automatic cleaning function.

The kitchen machine comprises a vessel (1), an agitator (2) located in the vessel (1), a motor (3) configured to rotate the agitator (2), a heater (5) configured to heat the vessel (1), a temperature sensor (6) configured to detect a temperature of the vessel (1), and a controller (7) configured, for cleaning the vessel (1), to control, based on a temperature detected by the temperature sensor (6), at least one of a rotation speed of the motor (3), a rotation duration of the motor (3), a rotation direction of the motor (3), a heating temperature of the heater (5), and a heating duration of the heater (5).

## Description

The present disclosure relates to a kitchen machine. Specifically, the present disclosure relates to a kitchen machine that comprises a vessel and that has a cleaning function for automatically cleaning the vessel.

Known kitchen machines comprise an agitator located in the vessel, a motor for rotating the agitator, a heater for heating the vessel, a temperature sensor for detecting a temperature of the vessel, and a controller for controlling the motor and the heater. The kitchen machine can be used to automatically process, including cutting, mixing and cooking food. As a result, the user is freed from repetitive tasks in the preparation of the food. To further increase the user convenience, such a kitchen machine can have a cleaning function for automatically cleaning the vessel. Before starting the cleaning, the user needs to fill the vessel with a sufficient volume of water, if necessary with detergent. The user can then operate the kitchen machine to launch the cleaning function. Accordingly, the controller controls the motor to rotate the agitator at a certain speed for a certain period of time, so that the movement of the stirred liquid helps to detach food soils from the inner surface of the vessel as well as from the surface of the agitator itself.

The controller of the kitchen machine can additionally control the heater to heat the vessel and thus the liquid therein during the cleaning. Hotter liquid helps to soften food soils and dissolve grease, thereby making the cleaning more effective. A kitchen machine with a cleaning function integrating a heating process is described in publication WO 2020/024894 A1. However, the heating process consumes electricity and takes time. Thus, if always included as a part of the cleaning, it can result in high electricity costs and inflexibility for the user, in particular, when the vessel is only slightly soiled or the user wants to reuse the kitchen machine immediately for preparing the next dish or carrying out the next cooking step.

Another way to improve cleaning effectiveness is to fasten a dedicated cleaning tool to the agitator before the cleaning function is launched. During the cleaning, a usual agitator in the form of a blade set stirs the liquid and thus indirectly impacts food soils attached to the inner surface of the vessel. In contrast, a dedicated cleaning tool can be designed to contact the inner surface of the vessel directly, allowing for a swifter removal of food soils. Publication US 10 960 369 B2 describes such a dedicated cleaning tool. A dedicated cleaning tool nevertheless requires mounting and demounting each time carrying out the cleaning, and is not preferable, for example, when the vessel is only slightly soiled or the user wants to continue immediately with the food processing.

The present disclosure is directed to the object of providing a kitchen machine with a cleaning function that ensures cleaning effectiveness, energy efficiency, and user flexibility.

This object is addressed by a kitchen machine as defined in claim 1. Further aspects of the present disclosure are defined in the dependent claims.

The kitchen machine comprises a vessel, an agitator located in the vessel, a motor configured to rotate the agitator, a heater configured to heat the vessel, a temperature sensor configured to detect a temperature of the vessel, and a controller configured to control the motor and the heater. The controller is further configured, for cleaning the vessel, to control, based on a temperature detected by the temperature sensor, at least one of a rotation speed of the motor, a rotation duration of the motor, a rotation direction of the motor, a heating temperature of the heater, and a heating duration of the heater.

The vessel may be any kind of container that is configured to hold food to be processed by the kitchen machine. For example, the vessel may be detachable from and attachable to the kitchen machine. However, it is also possible that the vessel is mounted in a fixed manner to the kitchen machine. The agitator located in the vessel may, for example, comprise a stirrer or blades, which can be used for processing food that is held inside the vessel. The motor configured to rotate the agitator may be an electric motor. For example, the motor may be mechanically connected to the agitator by a shaft, which extends through the vessel, so that the motor can rotate the agitator. The heater may, for example, be a heating plate that is located at a bottom of the vessel. The temperature sensor may, for example, be a Negative Temperature Coefficient (NTC) sensor that is also located at the bottom of the vessel. The controller may, for example, be a microcontroller. Additional elements, like a memory for the controller, and other food-processing-related elements or sensors may be included in the kitchen machine.

The rotation speed of the motor, the rotation duration of the motor, the rotation direction of the motor, the heating temperature of the heater, and/or the heating duration of the heater may be collectively or selectively used during a cleaning process. Since the temperature of the vessel and thus the temperature of a liquid contained therein have a direct influence on the liquid's capability of softening food soils and dissolving grease, etc., it is advantageous to automatically adjust the cleaning process based on the detected temperature. For example, if the user adds hot liquid into the vessel before starting the cleaning or if the vessel still has residual heat from the last cooking, the controller can take such a condition into account, and adjust the cleaning process accordingly.

Preferably, the controller is configured to obtain, based on the detected temperature, one of a plurality of cleaning programs, and control at least one of the motor and the heater based on the obtained cleaning program. The obtained cleaning program specifies at least one value of the at least one of a rotation speed of the motor, a rotation duration of the motor, a rotation direction of the motor, a heating temperature of the heater, and a heating duration of the heater. For example, the cleaning program may be obtained from a memory in the kitchen machine, a memory in the controller, or via a communication interface from a cloud server.

Preferably, the temperature is detected before the controller has started to control the at least one of the motor and the heater based on the obtained cleaning program. Advantageous cleaning results can be obtained if the initial selection of the cleaning program is based on the temperature detected before the cleaning process is started. Thus, an optimal cleaning process can be selected before the start of the cleaning operation.

Preferably, a first cleaning program of the plurality of cleaning programs associated with a first detected temperature defines, compared to a second cleaning program of the plurality of cleaning programs associated with a second detected temperature lower than the first detected temperature, a shorter total execution duration and/or a lower total energy consumption of the kitchen machine during the execution of the first cleaning program. In this way, the first cleaning program can still achieve a satisfying cleaning result, relying on hotter liquid's enhanced capability of softening food soils and dissolving grease, etc., while saving time and/or increasing energy efficiency.

Preferably, the first cleaning program specifies, compared to the second cleaning program, at least one of a lower rotation speed of the motor, a shorter rotation duration of the motor, a lower heating temperature of the heater, and a shorter heating duration of the heater. The adjustment of each of these parameters can contribute to the reduction of the total execution duration and/or the total energy consumption of the kitchen machine.

Preferably, each of the plurality of cleaning programs is associated with a temperature range, and the controller is configured to determine into which temperature range the detected temperature falls, and obtain a cleaning program of the plurality of cleaning programs associated with the determined temperature range. This further helps to improve the cleaning results.

Preferably, the controller is configured to receive, through a user interface of the kitchen machine, a user input for selecting one of a plurality of cleaning modes, and obtain, based on a combination of the selected cleaning mode and the detected temperature, a cleaning program of the plurality of cleaning programs. Each of the plurality of cleaning programs may be associated with one of the cleaning modes. Thus, the user can actively participate in the selection of the cleaning program in such a way that the user is not required to select specific parameters, but only one of a plurality of cleaning modes. In this way, a fair balance between automation and user flexibility is provided.

Preferably, the cleaning modes comprise a first cleaning mode and a second cleaning mode. A cleaning program associated with the first cleaning mode defines, compared to a cleaning program associated with the second cleaning mode, a shorter total execution duration and/or a lower total energy consumption of the kitchen machine during the execution of the cleaning program. For example, the first cleaning mode may be a "Quick Wash" mode for easy vessel refreshment between two cooking steps or similar uses, and the second cleaning mode may be a "Deep Cleaning" mode for removing tough or dried up food soils.

Preferably, the cleaning program associated with the first cleaning mode specifies, compared to the cleaning program associated with the second cleaning mode, at least one of a lower rotation speed of the motor, a shorter rotation duration of the motor, a lower heating temperature of the heater, and a shorter heating duration of the heater. The adjustment of each of these parameters can contribute to the reduction of the total execution duration and/or the total energy consumption of the kitchen machine.

Preferably, each of the cleaning modes is associated with more than one of the plurality of cleaning programs, each detected temperature is associated with more than one of the plurality of cleaning programs, and a combination of the selected cleaning mode and the detected temperature is associated with a single one of the plurality of cleaning programs. Thus, different combinations of the above two variables can lead to different cleaning programs, each adapted to the individual needs of the cleaning of the vessel and the agitator.

Preferably, the controller is configured to control, according to the obtained cleaning program, the motor to change a rotation direction at least once during the control of the motor based on the obtained cleaning program. When liquid is stirred in different directions, it can impact food soils attached to the inner surface of the vessel and the surface of the agitator from different directions, thereby more effectively removing the food soils.

Preferably, the controller is configured to control, according to the obtained cleaning program, the motor to rotate at different rotation speeds in different rotation directions during the control of the motor based on the obtained cleaning program. Thus, the stirred liquid can impact food soils from different directions with varying forces, thereby more effectively removing the food soils.

Preferably, the controller is configured to determine, based on an input received from a sensor of the kitchen machine, a filling level of a liquid in the vessel, and only start the control of the at least one of the motor and the heater based on the obtained cleaning program when the determined filling level is within a predetermined range. The predetermined range may be defined by a minimum threshold value and/or a maximum threshold value. An erroneous launch of the cleaning process while the vessel is not filled with sufficient liquid may cause wasteful energy consumption, user inconvenience or even machine damage. On the other hand, excess liquid added due to user negligence or misuse of the kitchen machine may be detrimental to the cleaning quality, energy efficiency or even user safety. By automatically detecting a filling level of a liquid in the vessel and using it as a starting condition of the cleaning process, such an erroneous or improper launch of the cleaning process can be avoided. In addition to or instead of preventing the launch of the cleaning process, the controller may be configured to control the user interface to display a warning message reminding the user to add more liquid into or remove excess liquid from the vessel, when the determined filling level is not within the predetermined range.

Preferably, the sensor comprises at least one of a weight sensor, a proximity sensor, an optical sensor, and an ultrasonic sensor. Different sensors may be used for detecting the filling level of the vessel. A weight sensor is preferable due to its simplicity and usage in a kitchen machine for additional food-preparation purposes. For example, a weight of the vessel filled with cleaning liquid, which is determined by the weight sensor, may be set in relation to the volume of the cleaning liquid and the filling level.

Preferably, the controller is configured to control the heater to only heat the vessel when the detected temperature is lower than a threshold value. This can help to reduce overuse of a heating process, thereby improving energy efficiency.

The foregoing summary, as well as the following detailed description of the embodiments, will be better understood when read in conjunction with the drawings. It will be understood that the invention is not limited to the specific embodiments described, and reference is made to the claims for that purpose. In the drawing:
- Fig. 1: schematically shows a kitchen machine according to an embodiment of the invention,
- Fig. 2: schematically shows a user interface of the kitchen machine according to an embodiment of the invention,
- Fig. 3: schematically shows a graphical user interface of the kitchen machine according to an embodiment of the invention, and
- Fig. 4: schematically shows a graphical user interface of the kitchen machine according to an embodiment of the invention, which is an alternative to that of Fig. 3.

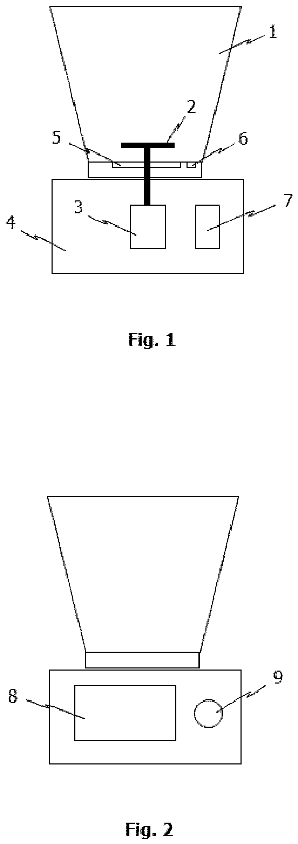

Fig. 1 schematically shows a kitchen machine according to an embodiment of the invention. The kitchen machine comprises a vessel 1 for processing food. An agitator 2 is located in the vessel 1 and may comprise a blade set configured to cut and stir the food contained in the vessel 1. The lower part of the agitator 2 passes through a bottom hole of the vessel 1 to be connected to a motor 3 that is arranged in a base unit 4 of the kitchen machine 1 and that is configured to rotate the agitator 2. Optionally, further transmission parts, such as gears and belts, are provided between the agitator 2 and the motor 3. A heater 5 and a temperature sensor 6 are arranged in a housing attached to the bottom of the vessel 1. The heater 5 is configured to heat the vessel 1 and the temperature sensor 6 is configured to detect a temperature of the vessel 1. A controller 7 is arranged in the base unit 4 and is configured to control the motor 3 and the heater 5 for processing food or, as will be described below in detail, for cleaning the vessel 1. The controller may be one or a group of microcontrollers electronically connected to the motor 3, the heater 5, and the temperature sensor 6. The locations of the components of the kitchen machine as depicted in Fig. 1 are only exemplary. The kitchen machine may comprise further mechanical and electrical components that are well known for such a kitchen machine, and are therefore not illustrated in Fig. 1.

Fig. 2 schematically shows a user interface of the kitchen machine depicted in Fig. 1. The user interface is provided on the base unit 4 and comprises a display 8 for displaying information and a physical button 9 for receiving user input. Instead of the button 9, the display 8 may also be a touch sensitive display. Furthermore, the user interface may be provided on a tablet wirelessly connected to the base unit 4, instead of or in addition to being provided directly on the base unit 4. For this, the kitchen machine may comprise a wireless communication interface (not shown in the figures). The user interface may further comprise a voice recognition unit for receiving a user input.

According to an embodiment of the invention, the user can select a cleaning function, among functions including mixing, cooking etc., on the user interface. The cleaning function can be selected by pressing a physical button, touching a virtual button in a menu displayed on a graphical user interface, via voice control, etc. Once the cleaning function is selected and before the cleaning process is started, the user interface may display information instructing the user to fill the vessel 1 with water, if necessary with detergent. Optionally, the controller 7 is configured to determine, based on an input received from a sensor of the kitchen machine (not shown in the figures), a filling level of a liquid in the vessel 1, and only start the cleaning process when the determined filling level is within a predetermined range. The predetermined range may be defined by a minimum threshold value and/or a maximum threshold value. In addition to or instead of preventing the launch of the cleaning process, the controller may be configured to control the user interface to display a warning message reminding the user to add more liquid into or remove excess liquid from the vessel, when the determined filling level is not within the predetermined range. The sensor may comprise at least one of a weight sensor, a proximity sensor, an optical sensor, and an ultrasonic sensor.

After the cleaning function is selected and before the cleaning process is started, the controller 7 is configured to receive an input from the temperature sensor 6 regarding the temperature of the vessel 1. The temperature of the vessel 1 may be dependent, for example, on the temperature of the liquid added by the user, the residual heat left at the vessel 1 from the last cooking, etc. The controller 7 is configured to obtain, based on the detected temperature, one of a plurality of cleaning programs. The plurality of cleaning programs may be stored in a memory in the controller 7, in a memory in the kitchen machine, or in a cloud server, to which the kitchen machine is connected via a communication interface (not shown in the figures). Each of the plurality of cleaning programs specifies at least one value of at least one of a rotation speed of the motor 3, a rotation duration of the motor 3, a rotation direction of the motor 3, a heating temperature of the heater 5, and a heating duration of the heater 5.

Preferably, each of the plurality of cleaning programs is associated with a temperature range. The controller 7 is configured to determine into which temperature range the detected temperature falls, and selects a cleaning program of the plurality of cleaning programs associated with the determined temperature range. An example for the association between the temperatures ranges and the cleaning programs is shown in the following Table 1.

**Table 1**

| Detected Temperature | Cleaning Program Nr. | Cleaning Actions | Total Execution Duration |
|---|---|---|---|
| < 37°C | 1 | Step 1: Control the heater to heat the vessel for 2 minutes; control the motor to rotate the agitator at a low speed (clockwise) at the same time | 120+(15+15)*2 +(15+15) *4 = 300 seconds |
| | | Step 2: Control the motor to rotate the agitator at a medium-low speed (clockwise) for 15 seconds | |
| | | Step 3: Control the motor to rotate the agitator at a medium-low speed (anticlockwise) for 15 seconds | |
| | | Step 4: Repeat steps 2-3 | |
| | | Step 5: Control the motor to rotate the agitator at a high speed (clockwise) for 15 seconds | |
| | | Step 6: Control the motor to rotate the agitator at a medium-low speed (anticlockwise) for 15 seconds | |
| | | Step 7: Repeat steps 5-6 for 3 times | |
| >=37<60°C | 2 | Step 1: Control the motor to rotate the agitator at a high speed (clockwise) for 15 seconds | (15+15)*6 = 180 seconds |
| | | Step 2: Control the motor to rotate the agitator at a medium-low speed (anticlockwise) for 15 seconds | |
| | | Step 3: Repeat steps 1-2 for 5 times | |
| >=60°C | 3 | Step 1: Control the motor to rotate the agitator at a medium-high speed (clockwise) for 15 seconds | (15+15)*6 = 180 seconds |
| | | Step 2: Control the motor to rotate the agitator at a medium-low speed (anticlockwise) for 15 seconds | |
| | | Step 3: Repeat steps 1-2 for 5 times | |

Table 1 defines three temperature ranges. Alternatively, the number of temperature ranges may be lower or higher than three. The end values of the temperatures ranges may also be other than 37°C and 60°C. All the other values given in Table 1 are only exemplary and may be amended when implementing the invention. Preferably, the low speed in Table 1 is in a range of 50 to 200 revolutions per minute (rpm), the medium-low speed in Table 1 is in a range of 600 to 1000 rpm, the medium-high speed in Table 1 is in a range of 2000 to 2400 rpm, and the high speed in Table 1 is in a range of 4800 to 5200 rpm. These speeds refer to the rotation speeds of the agitator 2. Since transmission parts, such as gears or belts (not shown in the figures), may be provided between the agitator 2 and the motor 3, the rotation speeds of the motor 3 may be different from but proportional to the rotation speeds of the agitator 2, depending on the transmission ratio.

As shown in Table 1, cleaning program 1 specifies a fixed heating duration of 2 minutes. This configuration allows for an easy control of the heater 5 and the fixation of the total execution duration of the cleaning program. Alternatively, a cleaning program may specify, instead of a heating duration, a heating temperature of the heater 5, i.e., a target temperature to be achieved by the heating. For example, a cleaning program may specify a first cleaning step as heating the vessel 1 up to 50°C. Accordingly, the controller 7 may be configured to monitor the vessel temperature during the heating process and stop the heating process once the vessel temperature reaches the heating temperature. In this way, although the total execution duration of the cleaning program is not fixed, the vessel temperature and thus the cleaning effectiveness can be ensured.

Each of cleaning programs 1 to 3 shown in Table 1 requires the controller 7 to control the motor 3 to change a rotation direction several times during the execution of the cleaning program. Furthermore, the controller 7 is required to control the motor 3 to rotate at different rotation speeds in different rotation directions, except for in steps 2 and 3 of cleaning program 1. When liquid is stirred in different directions at different speeds, it can impact food soils attached to the inner surface of the vessel 1 and the surface of the agitator 2 from different directions with varying forces, thereby more effectively removing the food soils. Additionally or alternatively, a cleaning program may specify no change of a rotation direction or specify a same rotating speed for different rotating directions.

As shown in Table 1, cleaning program 2 requires a shorter total execution duration than that of cleaning program 1. In particular, cleaning program 2 specifies, compared to cleaning program 1, a shorter rotation duration of the motor 3 and a shorter heating duration of the heater 5. Specifically, cleaning program 2 specifies a rotation duration of 180 seconds in total and a heating duration of 0 second, whereas cleaning program 1 specifies a rotation duration of 300 seconds in total and a heating duration of 120 seconds. Thus, cleaning program 2 may require, compared to cleaning program 1, a lower total energy consumption of the kitchen machine, at least because of the absence of an energy-intensive heating process. Therefore, by choosing cleaning program 2 over cleaning program 1, both time and energy consumption can be saved. Still, cleaning program 2 can help to achieve a satisfying cleaning result, relying on hotter liquid's better capability of softening food soils and dissolving grease, etc.

As further shown in Table 1, both of cleaning programs 2 and 3 specify a same rotation duration of the motor 3, namely 180 seconds. Neither of cleaning programs 2 and 3 requires a heating process. However, they differ from each other by specifying different rotation speeds of the motor 3 in a clockwise direction. Specifically, cleaning program 2 specifies a high rotation speed of the motor 3 in a clockwise direction, whereas cleaning program 3 specifies a medium-high rotation speed of the motor 3 in a clockwise direction. Thus, cleaning program 3 specifies, compared to cleaning program 2, a lower rotation speed of the motor 3 in a clockwise direction. Consequently, cleaning program 3 requires, compared to cleaning program 2, a lower total energy consumption of the kitchen machine. By choosing cleaning program 3 over cleaning program 2, energy consumption can be saved. Still, cleaning program 3 can help to achieve a satisfying cleaning result, relying on hotter liquid's better capability of softening food soils and dissolving grease, etc.

Again, the specific arrangement of Table 1 is only provided for illustration purposes. Other arrangements are conceivable when implementing the invention. For example, cleaning program 2 may be modified to incorporate a heating process having a lower heating temperature of the heater 5 and/or a shorter heating duration of the heater 5, compared to that of cleaning program 1. As a further example, cleaning program 3 may be modified to specify a same rotation speed of the motor 3 in a clockwise direction as that of cleaning program 2, but specify a shorter rotation duration of the motor 3 in a clockwise direction than that of cleaning program 2.

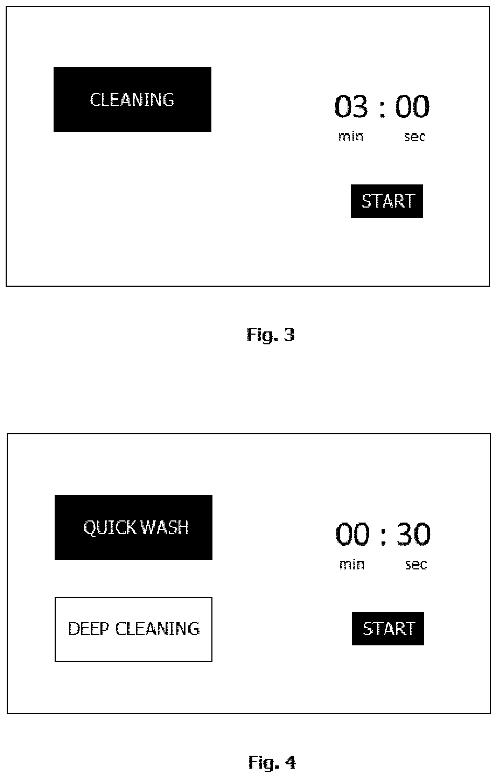

Once the controller 7 has obtained the cleaning program, the controller 7 can immediately start to control at least one of the motor 3 and the heater 5 based on the obtained cleaning program. Alternatively, the controller 7 is configured to start the cleaning process only after the user has confirmed the start, for example, by pressing a physical button, touching a virtual button displayed on a graphical user interface, via voice control, etc. In this case, the user interface may display information regarding the selected cleaning program, such as its total execution duration, so that the user can confirm whether the obtained cleaning program is indeed desired. An example of a graphical user interface for this purpose is depicted in Fig. 3.

In the above-described embodiments, the controller 7 is configured to obtain one of the plurality of the cleaning programs entirely based on the detected vessel temperature.

According to an alternative embodiment of the invention, the controller 7 is configured to receive, through the user interface of the kitchen machine, a user input for selecting one of a plurality of cleaning modes. The user input may be applied by pressing a physical button, touching a virtual button displayed on a graphical user interface, via voice control, etc. An example of a graphical user interface for this purpose is depicted in Fig. 4. In this example, a first cleaning mode is a "Quick Wash" mode for easy vessel refreshment between two cooking steps or similar uses, and a second cleaning mode is a "Deep Cleaning" mode for removing tough or dried up food soils. Of course, the number and the names of the cleaning modes are only exemplarily.

Once the cleaning mode is selected and before the cleaning process is started, the user interface may display information instructing the user to fill the vessel 1 with water, if necessary with detergent. Optionally, the controller is configured to determine, based on an input received from a sensor of the kitchen machine, a filling level of a liquid in the vessel 1, and only start the cleaning process when the determined filling is within a predetermined range. The predetermined range may be defined by a minimum threshold value and/or a maximum threshold value. In addition to or instead of preventing the launch of the cleaning process, the controller may be configured to control the user interface to display a warning message reminding the user to add more liquid into or remove excess liquid from the vessel, when the determined filling level is not within the predetermined range. The sensor may comprise at least one of a weight sensor, a proximity sensor, an optical sensor, and an ultrasonic sensor.

After the user has selected one of the two cleaning modes and before the cleaning process is started, the controller 7 is configured to receive an input from the temperature sensor 6 regarding the temperature of the vessel 1, and obtain, based on a combination of the selected cleaning mode and the detected temperature, one of a plurality of cleaning programs. The plurality of cleaning programs may be stored in a memory in the controller 7, in a memory in the kitchen machine, or in a cloud server. Each of the plurality of cleaning programs specifies at least one value of at least one of a rotation speed of the motor 3, a rotation duration of the motor 3, a rotation direction of the motor 3, a heating temperature of the heater 5, and a heating duration of the heater 5.

According to a preferred embodiment, each of the two cleaning modes is associated with more than one of the plurality of cleaning programs. For instance, the "Deep Cleaning" mode may be associated with cleaning programs 1 to 3 as shown in Table 1. The "Quick Wash" mode may be associated with cleaning programs 4 to 5 as shown in the following Table 2.

**Table 2**

| Detected Temperature | Cleaning Program Nr. | Cleaning Actions | Total Execution Duration |
|---|---|---|---|
| <60°C | 4 | Step 1: Control the motor to rotate the agitator at a high speed (clockwise) for 10 seconds | 30 seconds |
| | | Step 2: Control the motor to rotate the agitator at a medium-low speed (anticlockwise) for 10 seconds | |
| | | Step 3: Control the motor to rotate the agitator at a high speed (clockwise) for 10 seconds | |
| >=60°C | 5 | Step 1: Control the motor to rotate the agitator at a medium-high speed (clockwise) for 10 seconds | 30 seconds |
| | | Step 2: Control the motor to rotate the agitator at a medium-low speed (anticlockwise) for 10 seconds | |
| | | Step 3: Control the motor to rotate the agitator at a medium-high speed (clockwise) for 10 seconds | |

Table 2 defines two temperature ranges. Alternatively, the number of temperature ranges may be lower or higher than two. The end value of the temperatures ranges may also be different from 60°C. All the other values given in Table 2 are only preferred values, however, not limiting. Preferably, the medium-low speed in Table 2 is in a range of 600 to 1000 rpm, the medium-high speed in Table 2 is in a range of 2000 to 2400 rpm, and the high speed in Table 2 is in a range of 4800 to 5200 rpm. These speeds refer to the rotation speeds of the agitator 2. Since transmission parts, such as gears or belts (not shown in the figures), may be provided between the agitator 2 and the motor 3, the rotation speeds of the motor 3 may be different from but proportional to the rotation speeds of the agitator 2, depending on the transmission ratio.

According to Tables 1 and 2, each combination of the selected cleaning mode and the detected temperature is associated with a single one of cleaning programs 1 to 5. For instance, if the "Deep Cleaning" mode is selected and the detected temperature is 40°C, the controller 7 will obtain cleaning program 2. However, if the "Quick Wash" mode is selected and the detected temperature is 40°C, the controller 7 will obtain cleaning program 4.

As shown in Tables 1 and 2, cleaning programs 4 and 5 specify, compared to cleaning programs 1 to 3, a shorter rotation duration of the motor 3. Specifically, both of cleaning programs 4 and 5 specify a total rotation duration of 30 seconds, whereas cleaning programs 1 to 3 specify a total rotation duration of 300 seconds, 180 seconds and 180 seconds, respectively. Therefore, each of cleaning programs 4 and 5 defines, compared to each of cleaning programs 1 to 3, a shorter total execution duration, and may thus lead to a lower total energy consumption of the kitchen machine. Therefore, by choosing each of cleaning programs 4 and 5 over each of cleaning programs 1 to 3, both time and energy consumption can be saved. However, it should be noted that cleaning programs 4 and 5 may already be sufficient for easy vessel refreshment between two cooking steps, or when the vessel 1 is only slightly soiled.

Cleaning programs 4 and 5 differ from each other by specifying different rotation speeds of the motor 3 in a clockwise direction. Specifically, cleaning program 4 specifies a high rotation speed of the motor 3 in a clockwise direction, whereas cleaning program 5 specifies a medium-high rotation speed of the motor 3 in a clockwise direction. Thus, cleaning program 5 specifies, compared to cleaning program 4, a lower rotation speed of the motor 3 in a clockwise direction. Consequently, cleaning program 5 requires, compared to cleaning program 4, a lower total energy consumption of the kitchen machine. By choosing cleaning program 5 over cleaning program 4, energy consumption is saved. However, it should be noted that cleaning program 5 can help to achieve a satisfying cleaning result, relying on hotter liquid's better capability of softening food soils and dissolving grease, etc.

Again, the specific arrangement of Table 2 is only provided for illustration purposes. Other arrangements can be conceived when implementing the invention. For example, cleaning program 5 may be modified to specify a same rotation speed of the motor 3 in a clockwise direction as that of cleaning program 4, but specify a shorter rotation duration of the motor 3 in a clockwise direction than that of cleaning program 4. However, the total execution duration of any cleaning program for the "Quick Wash" mode is preferably less than 1 minute, since otherwise the user may have to wait too long.

Once the controller 7 has obtained the cleaning program, the controller 7 can immediately start to control at least one of the motor 3 and the heater 5 based on the obtained cleaning program. Alternatively, the controller 7 is configured to start the cleaning process only after the user has confirmed the start by pressing a physical button, touching a virtual button displayed on a graphical user interface, via voice control, etc. In this case, the user interface may display information regarding the obtained cleaning program, such as its total execution duration, as illustrated in Fig. 4, so that the user can confirm whether the obtained cleaning program is indeed desired.

Although the present invention has been described in detail with reference to the above embodiments, it should be understood that various changes, substitutions, and alterations can be made therein without departing from the invention as defined by the appended claims. The scope of the invention is thus not intended to be limited to the particular embodiments described herein.

## Claims

1. A kitchen machine comprising:
a vessel (1);
an agitator (2) located in the vessel (1);
a motor (3) configured to rotate the agitator (2);
a heater (5) configured to heat the vessel (1);
a temperature sensor (6) configured to detect a temperature of the vessel (1); and
a controller (7) configured to control the motor (3) and the heater (5), wherein
the controller (7) is further configured, for cleaning the vessel (1), to control, based on a temperature detected by the temperature sensor (6), at least one of a rotation speed of the motor (3), a rotation duration of the motor (3), a rotation direction of the motor (3), a heating temperature of the heater (5), and a heating duration of the heater (5).

2. The kitchen machine according to claim 1, wherein the controller (7) is further configured to:
obtain, based on the detected temperature, one of a plurality of cleaning programs, the obtained cleaning program specifying at least one value of the at least one of a rotation speed of the motor (3), a rotation duration of the motor (3), a rotation direction of the motor (3), a heating temperature of the heater (5), and a heating duration of the heater (5); and
control at least one of the motor (3) and the heater (5) based on the obtained cleaning program.

3. The kitchen machine according to claim 2, wherein the temperature is detected before the controller (7) has started to control the at least one of the motor (3) and the heater (5) based on the obtained cleaning program.

4. The kitchen machine according to any of claims 2 to 3, wherein a first cleaning program of the plurality of cleaning programs associated with a first detected temperature defines, compared to a second cleaning program of the plurality of cleaning programs associated with a second detected temperature lower than the first detected temperature, a shorter total execution duration and/or a lower total energy consumption of the kitchen machine during the execution of the first cleaning program.

5. The kitchen machine according to claim 4, wherein the first cleaning program specifies, compared to the second cleaning program, at least one of a lower rotation speed of the motor (3), a shorter rotation duration of the motor (3), a lower heating temperature of the heater (5), and a shorter heating duration of the heater (5).

6. The kitchen machine according to any of claims 2 to 5, wherein each of the plurality of cleaning programs is associated with a temperature range, and the controller (7) is configured to determine into which temperature range the detected temperature falls, and obtain a cleaning program of the plurality of cleaning programs associated with the determined temperature range.

7. The kitchen machine according to any of claims 2 to 6, wherein the controller (7) is further configured to:
receive, through a user interface of the kitchen machine, a user input for selecting one of a plurality of cleaning modes; and
obtain, based on a combination of the selected cleaning mode and the detected temperature, a cleaning program of the plurality of cleaning programs,
wherein each of the plurality of cleaning programs is associated with one of the cleaning modes.

8. The kitchen machine according to claim 7, wherein the cleaning modes comprise a first cleaning mode and a second cleaning mode, and
a cleaning program associated with the first cleaning mode defines, compared to a cleaning program associated with the second cleaning mode, a shorter total execution duration and/or a lower total energy consumption of the kitchen machine during the execution of the first cleaning program.

9. The kitchen machine according to claim 8, wherein the cleaning program associated with the first cleaning mode specifies, compared to the cleaning program associated with the second cleaning mode, at least one of a lower rotation speed of the motor (3), a shorter rotation duration of the motor (3), a lower heating temperature of the heater (5), and a shorter heating duration of the heater (5).

10. The kitchen machine according to any of claims 7 to 9, wherein each of the cleaning modes is associated with more than one of the plurality of cleaning programs,
wherein each detected temperature is associated with more than one of the plurality of cleaning programs, and
wherein a combination of the selected cleaning mode and the detected temperature is associated with a single one of the plurality of cleaning programs.

11. The kitchen machine according to any of claims 2 to 10, wherein the controller (7) is further configured to control the motor (3) to change a rotation direction at least once during the control of the motor (3) based on the obtained cleaning program.

12. The kitchen machine according to claim 11, wherein the controller (7) is further configured to control the motor (3) to rotate at different rotation speeds in different rotation directions during the control of the motor (3) based on the obtained cleaning program.

13. The kitchen machine according to any of claims 2 to 12, wherein the controller (7) is further configured to
determine, based on an input received from a sensor of the kitchen machine, a filling level of a liquid in the vessel (1), and
only start the control of the at least one of the motor (3) and the heater (5) based on the obtained cleaning program when the determined filling level is within a predetermined range,
wherein the predetermined range is defined by a minimum threshold value and/or a maximum threshold value.

14. The kitchen machine according to claim 13, wherein the sensor comprises at least one of a weight sensor, a proximity sensor, an optical sensor, and an ultrasonic sensor.

15. The kitchen machine according to any of the preceding claims, wherein the controller (7) is further configured to control the heater (5) to only heat the vessel (1) when the detected temperature is lower than a threshold value.

## Amended claims

### Amended claims in accordance with Rule 137(2) EPC.

1. A kitchen machine comprising:
a vessel (1);
an agitator (2) located in the vessel (1);
a motor (3) configured to rotate the agitator (2);
a heater (5) configured to heat the vessel (1);
a temperature sensor (6) configured to detect a temperature of the vessel (1) and thus a temperature of a cleaning liquid contained in the vessel (1) that has been added into the vessel before starting a cleaning of the vessel (1); and
a controller (7) configured to control the motor (3) and the heater (5),
wherein
the controller (7) is further configured, for the cleaning of the vessel (1), to control, based on the temperature detected by the temperature sensor (6), at least one of a rotation speed of the motor (3), a rotation duration of the motor (3), a rotation direction of the motor (3), a heating temperature of the heater (5), and a heating duration of the heater (5), wherein
the controller (7) is further configured to control the heater (5) to only heat the vessel (1) when the detected temperature is lower than a threshold value.

2. The kitchen machine according to claim 1, wherein the controller (7) is further configured to:
obtain, based on the detected temperature, one of a plurality of cleaning programs, the obtained cleaning program specifying at least one value of the at least one of a rotation speed of the motor (3), a rotation duration of the motor (3), a rotation direction of the motor (3), a heating temperature of the heater (5), and a heating duration of the heater (5); and
control at least one of the motor (3) and the heater (5) based on the obtained cleaning program, wherein
the temperature is detected before the controller (7) has started to control the at least one of the motor (3) and the heater (5) based on the obtained cleaning program.

3. The kitchen machine according to claim 2, wherein a first cleaning program of the plurality of cleaning programs associated with a first detected temperature defines, compared to a second cleaning program of the plurality of cleaning programs associated with a second detected temperature lower than the first detected temperature, a shorter total execution duration and/or a lower total energy consumption of the kitchen machine during the execution of the first cleaning program.

4. The kitchen machine according to claim 3, wherein the first cleaning program specifies, compared to the second cleaning program, at least one of a lower rotation speed of the motor (3), a shorter rotation duration of the motor (3), a lower heating temperature of the heater (5), and a shorter heating duration of the heater (5).

5. The kitchen machine according to any of claims 2 to 4, wherein each of the plurality of cleaning programs is associated with a temperature range, and the controller (7) is configured to determine into which temperature range the detected temperature falls, and obtain a cleaning program of the plurality of cleaning programs associated with the determined temperature range.

6. The kitchen machine according to any of claims 2 to 5, wherein the controller (7) is further configured to:
receive, through a user interface of the kitchen machine, a user input for selecting one of a plurality of cleaning modes; and
obtain, based on a combination of the selected cleaning mode and the detected temperature, a cleaning program of the plurality of cleaning programs,
wherein each of the plurality of cleaning programs is associated with one of the cleaning modes.

7. The kitchen machine according to claim 6, wherein the cleaning modes comprise a first cleaning mode and a second cleaning mode, and
a cleaning program associated with the first cleaning mode defines, compared to a cleaning program associated with the second cleaning mode, a shorter total execution duration and/or a lower total energy consumption of the kitchen machine during the execution of the first cleaning program.

8. The kitchen machine according to claim 7, wherein the cleaning program associated with the first cleaning mode specifies, compared to the cleaning program associated with the second cleaning mode, at least one of a lower rotation speed of the motor (3), a shorter rotation duration of the motor (3), a lower heating temperature of the heater (5), and a shorter heating duration of the heater (5).

9. The kitchen machine according to any of claims 6 to 8, wherein each of the cleaning modes is associated with more than one of the plurality of cleaning programs,
wherein each detected temperature is associated with more than one of the plurality of cleaning programs, and
wherein a combination of the selected cleaning mode and the detected temperature is associated with a single one of the plurality of cleaning programs.

10. The kitchen machine according to any of claims 2 to 9, wherein the controller (7) is further configured to control the motor (3) to change a rotation direction at least once during the control of the motor (3) based on the obtained cleaning program.

11. The kitchen machine according to claim 10, wherein the controller (7) is further configured to control the motor (3) to rotate at different rotation speeds in different rotation directions during the control of the motor (3) based on the obtained cleaning program.

12. The kitchen machine according to any of claims 2 to 11, wherein the controller (7) is further configured to
determine, based on an input received from a sensor of the kitchen machine, a filling level of a liquid in the vessel (1), and
only start the control of the at least one of the motor (3) and the heater (5) based on the obtained cleaning program when the determined filling level is within a predetermined range,
wherein the predetermined range is defined by a minimum threshold value and/or a maximum threshold value.

13. The kitchen machine according to claim 12, wherein the sensor comprises at least one of a weight sensor, a proximity sensor, an optical sensor, and an ultrasonic sensor.
